# EUROPEAN PATENT SPECIFICATION

(11) **EP 1 387 469 B1**
(45) Date of publication and mention of the grant of the patent: **17.07.2013**
(21) Application number: 03017418.9
(22) Date of filing: 01.08.2003
(51) Int. Cl.: H02K 15/00

(54) **Method and apparatus for winding multipole stators with termination hooks**
Verfahren und Vorrichtung zum Wickeln einer mehrpoligen elektrischen Maschine mit Hakenwicklungsanschlüssen
Procédé et dispositif pour enrouler des machines électriques multipolaires avec terminaisons à crochets

(30) Priority: 02.08.2002 EP 02425513
(43) Date of publication of application: 04.02.2004
(73) Proprietor: ATOP S.p.A., 50021 Barberino Val d'Elsa (Firenze) (IT)
(72) Inventor: Ponzio, Massimo, 50021 Barberino V. Elsa (FI) (IT); Cresti, Fabrizio, 50028 Tavarnelle Val di Pesa (IT)
(74) Representative: Celestino, Marco

(56) References cited:
- FR-A- 2 660 124
- US-A- 4 633 110
- US-A- 4 827 601
- US-A- 5 755 021
- US-A- 6 145 772

## Description

### Field of the invention

The present invention relates to the field of stator winding machines, and precisely it relates to a method for winding multi-pole stators with termination hooks.

Furthermore, the invention relates to an apparatus that carries out this method.

### Background of the invention

As known, (see documents FR-A-2660124 and US-A-4633110) multi-pole stators exist formed by a substantially star-shaped stack of sheets featuring a plurality of poles extending from a tubular core. The stators of this type are suitable for coupling with an inner concentric armature or outer ring armature. they are common in brushless motors.

The peripheries of the poles, or pole extensions, form substantially a cylinder with a plurality of slits parallel or oblique with respect to the axis of the stator. The peripheries of the poles are connected to the core by means of pole walls that define corresponding grooves, accessible through the slits. The grooves have to be filled with insulated lead wire, by creating coils spooled about the pole walls.

At winding, where possible, the wire must pass necessarily through the slits for entering the grooves, and has to be guided to avoid collisions against the edges of the grooves. To this purpose, winding machines exist having a winding arm, or flier, which rotates causing the wire to follow a circular trajectory thus creating the coil of each pole. The wire follows the circular trajectory while it is guided in the slits by means of special winding forms.

One of the winding forms has the shape of a shroud and allows the wire to pass the pole making substantially a double chute guide that deviates the wire from its own circular trajectory and brings it to wind about the pole wall. The shroud normally is mounted on a support shaft co-axial to the flier and is movable towards/away from the axis of the stator for laying uniformly the wire along the pole wall.

By rotating, at winding, about the support shaft of the shroud the flier has an end that moves in orbital position both with respect to the pole being wound and to the shroud that guides the wire into the grooves.

Each portion of wire wound about one or more poles has at least two ends. In order to assure an electrical contact, which is necessary for the passage of the induction current that causes the armature to rotate and the motor to work, the ends must be connected to hooks; then a step of welding the hooks follows in order to dissolve the insulating film of the wire and to form an electrical contact. The hooks, in turn, when the motor is assembled are connected to the current supply circuits for the operation of the motor. The hooks are integrated or implanted in a terminal board, which is a body of plastic material that insulates the inner and front faces of the stack of sheets thus forming the ferromagnetic core of the stator.

After winding each coil, the wire is connected to one of the hooks, according to two possibilities:
a) the wire is wound one turn about the hook and then another coil is wound on another pole; in this case, the wire engages the hook;
b) the wire is cut at the hook, and the end can be, for a small portion, bent about the hook; at the same hook another end is arranged from which starts a coil;
for the case b) a termination device is provided that grips the wire, cuts it at the hook and carries out the termination step of the next coil wire end.
for the case a) there are many cases:
- the wire engages the hook creating an overturned "U", or an "Ω", or a arch;
- the wire forms a loop or an "alpha" about the hook.
for the case a) there are presently no methods for engaging the wire with the hook quickly and effective, without the use of further instruments that grip the wire.

### Summary of the invention

It is therefore object of the present invention to provide a method for winding outwardly spooled multi-pole stators having hooks, wherein the wire is caused to follow predetermined trajectories with the aid of selective rotations of the flier.

It is another object of the present invention to provide an auxiliary device that causes the wire to be fixed to the hooks of a multi-pole stator in co-operation with the flier.

It is another object of the present invention to provide such an auxiliary device that supports the hooks in the winding and termination steps.

These and other objects are accomplished with the method, according to the present invention, for winding multi-pole stators; wherein the stators are formed by a sheets stack ferromagnetic core, having an axis, a plurality of radially extending poles defining grooves between them, and a terminal board that coats in part the core and has a plurality of hooks; wherein the wire is wound about the pole extensions, spooled by a flier, and guided by shrouds, which move radially with respect to the stator overlapping the respective pole extension; wherein before and/or after winding, fastening operations are provided of the wire about the hooks by the flier; whose main characteristic is that it comprises the steps of:
- prearranging a shroud equipped with a housing suitable for receiving the hook;
- winding a coil about the pole and moving the shroud towards the hook for completing winding;
- overlapping the shroud and the hook which enters said housing so that the shrouds makes a guide for the wire on the hook;
- rotating the flier about its own axis in order to deposit the wire onto the hook;
- withdrawing the shroud up to disengaging the hook from the housing;
- indexing the stator and winding a next coil.

In case the wire must form a loop or "alpha" about the hook, in particular the steps are provided of:
- a first rotation of the flier about its own axis in order to deposit the wire onto the hook;
- withdrawing the shroud up to disengaging the hook from the housing;
- shielding the hook by means of a shield in order to force the wire in a chosen position;
- a second rotation of the flier about its own axis opposite to the first rotation, in order to form a loop, substantially an alpha-shaped loop, about the hook, owing to the wire to slide on the shield.

In particular, for generating the loop, after the first rotation of the flier for depositing the wire onto the hook, the shroud must disengage the hook for allowing the shield to arrange itself between the shroud and the hook same. Then, the wire stretched by the flier is forced to pass under the shield with the result that the wire forms the loop without disengaging from the hook.

Advantageously, the hooking step can be aided by indexing the stator about its own axis.

A machine for winding multi-pole stators, wherein the stators are formed by a sheets stack ferromagnetic core, having a axis, a plurality of radially extending poles defining grooves between them, and a terminal board that coats in part the core and has a plurality of hooks, comprises at least a flier and a shroud that moves radially with respect to the stator overlapping the respective pole extension.

In particular, said machine comprises:
- a shroud, having a face oriented towards the stator where a housing is made suitable for receiving a portion of the hook, to make a guide for the wire on the hook.

In case the stator provides that the wire forms a loop or "alpha" about the hooks, it has further:
- a shield movable between a disengaged position and a position engaged between the hook and the shroud, suitable for keeping the wire at a forced position, to prevent the wire from leaving the hook during a backwards movement of the flier.

Preferably, the shield, which covers the hooks during the termination, has a cylindrical shape co-axial to the stator, and moves axially.

Advantageously, the shield of cylindrical shape is peripherally equipped with at least a locking element that locates at a hook of the stator during termination.

Preferably, the shield has a plurality of locking elements in the form of teeth oriented towards below for engaging respective hooks. The locking elements supports the hooks preventing them from deformation and break owing to bending forces or hits in the winding and termination steps.

In an alternative embodiment, the locking elements comprise a central stiffening portion that in use is positioned behind the hooks and two side portions suitable for blocking the hooks with respect to the stator and guiding the wire in the winding and termionation step.

Furthermore, the locking element can be equipped with a protrusion or "tooth" that to prevents the hook from moving radially when pulled. This way, it is possible to avoid that in the termination step the actions generated by the wire on the hook can cause it to move away from the correct position or damaging it.

Alternatively, the shield has open shape, for example flat, but with at least a rounded edge, for allowing the wire to slide and preventing in the hooking step the wire from being damaged by the shield.

### Brief description of the drawings

Further characteristics and the advantages of the method and the device according to the invention for winding multi-pole stators will be made clearer with the following description of an embodiment thereof, exemplifying but not limitative, with reference to the attached drawings, wherein:
- figure 1 shows a perspective view of a shroud, according to the invention;

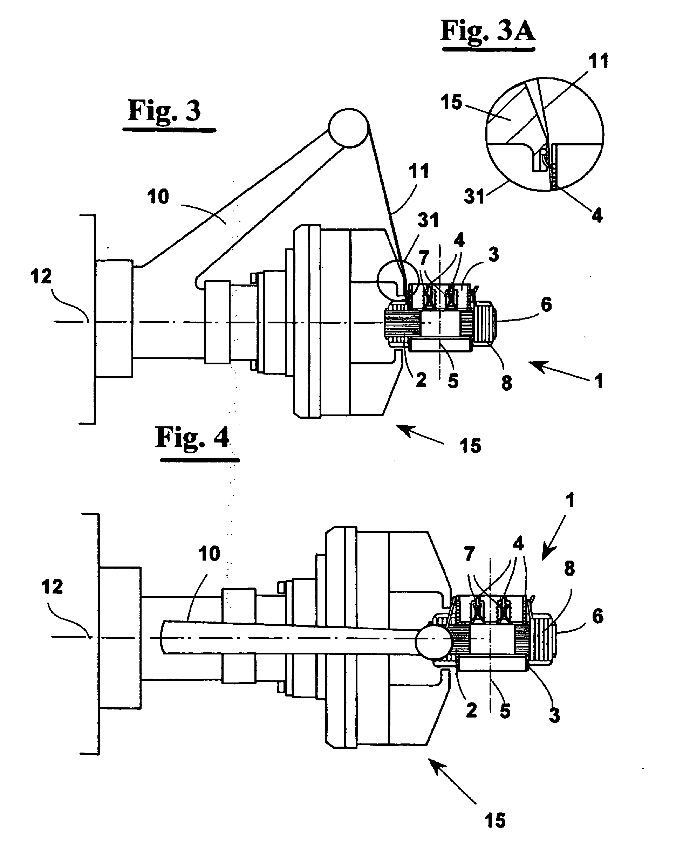

- figures 2-4, 6-7, 9 and 11 show an elevational side view of the succession of winding steps of the multi-pole stator and the device that carries out these steps, according to the invention;
- figures 2A and 2B show two possibility of engagement of the wire on the hook;
- figure 3A shows in detail the step where the hook engages the housing of the wire guiding shroud;
- figures 5, 8 and 10 are top plan views corresponding to figures 4, 7 and 9;
- figure 12 shows a different embodiment of the shroud of figure 1;
- figure 13 is a top plan view of a different embodiment of the method for winding a multi-pole stator, according to the invention;
- figure 14 shows in detail the relative position between shroud and hook for winding the multi-pole stator, according to a different according to the invention.
- figure 15 shows a front view of a first alternative embodiment of the shield shown in figures from 5 to 10;
- figure 16 shows a cross sectional view according to arrows XVI-XVI of the shield of figure 15;

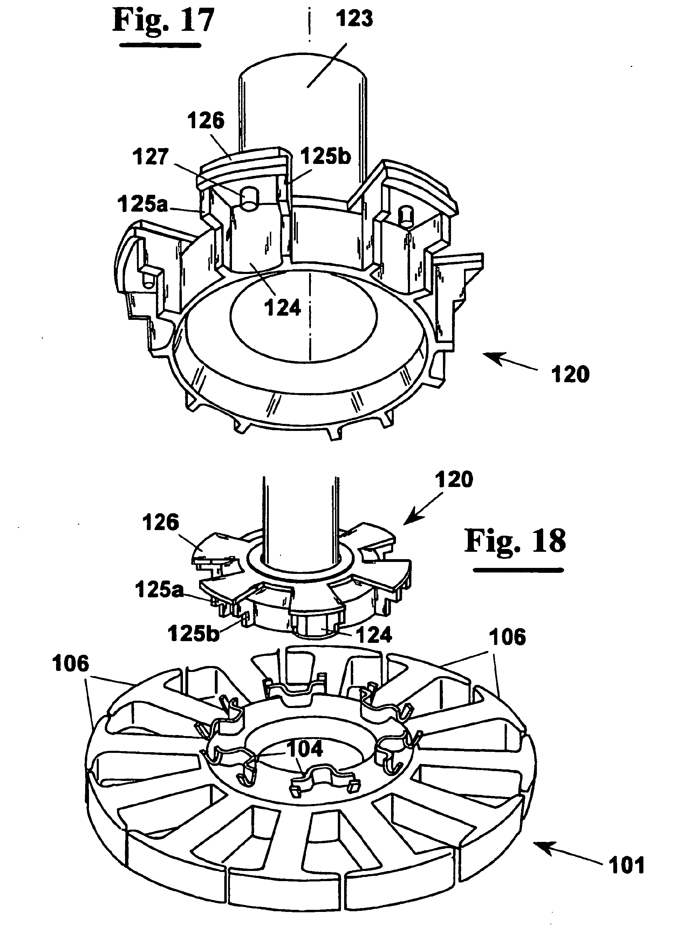

- figure 17 shows a second alternative embodiment of the shield shown in figures from 5 to 10;
- figure 18 shows the shield of figure 17 in a position of disengagement with respect to a multi-pole stator with "double hooks";
- figure 19 shows a perspective view of a detail of a locking element of the shield of figure 17 in engagement position with a hook of the multi-pole stator of figure 18;
- figure 20 shows a cross sectional view according to arrows XX-XX of a locking element of the shield in an engagement position with the hook of the multi-pole stator;
- figure 21 shows in a perspective elevational front view the locking element of the shield in engagement position with the hook of the multi-pole stator, showing the position of the tooth of the locking element relative to the hook of the stator.

### Description of a preferred embodiment

With reference to figures from 2 to 11, an outwardly spooled multi-pole stator 1 has a core formed by a stack of ferromagnetic sheets 2, having an axis 5 and a plurality of poles 6 that radially extend defining grooves between them. The stack 2 is in part covered by a terminal board 3 that has a plurality of hooks 4. To each hook 4 is connected an end of the wire spooled about a pole 6, causing the wire to follow a path 7 that engages a hook 4.

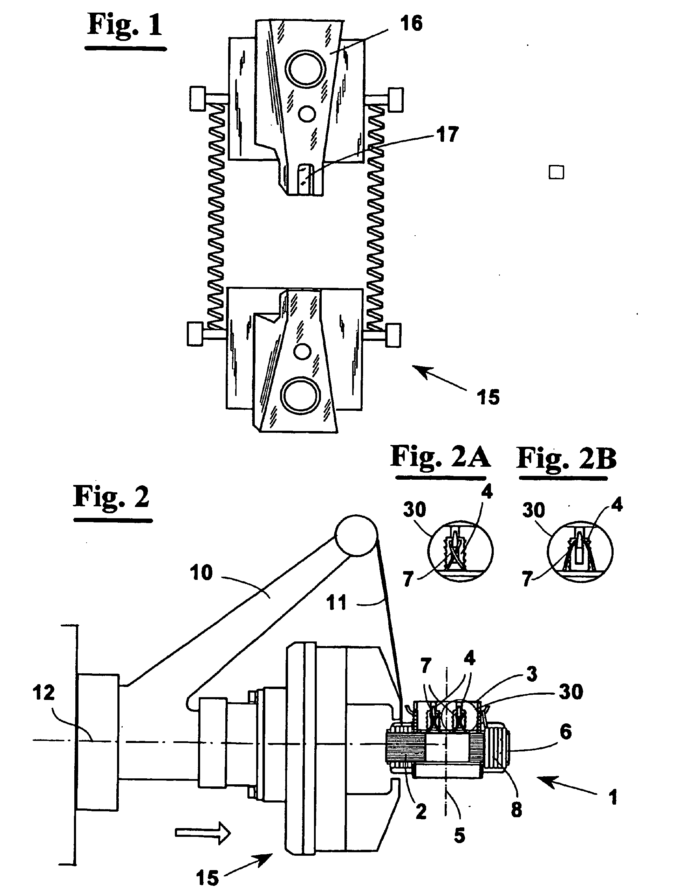

In particular, in figure 2A, which is a zoom of an encircled zone 30 of figure 2, the wire forms a loop 7, or "alpha", about hook 4. Instead, in figure 2B the wire forms substantially an overturned "U", or an "Ω", or a arch about hook 4. This depends by the winding layout of stator 1 and by the structure chosen by the manufacturer.

The winding step is carried out by a flier 10, or winding arm, which spools a wire 11, guided by shrouds 15, about the poles 6 of stator 1. At winding, shroud 15 moves radially with respect to stator 1 overlapping the respective pole 6.

Before and after winding fastening operations are provided of the end of wire 11 to hooks 4 with the aid of flier 10, according to the steps shown in figures from 2 to 11 and described hereinafter.

At first, (figure 1) a shroud 15 is arranged having a housing 17 suitable for receiving a portion of hook 4, to make a guide for wire 11 on hook 4.

On shroud 15 a coil 8 is wound on pole 6, with the aid of a reciprocation of shroud 15 same towards and away hook 4 up to the end of winding. Eventually, the shroud approaches the hook so that a portion of hook 4 enters housing 17 of shroud 15 and wire 11 can be guided on hook 4.

To this end, a first rotation of flier 10 is made about its own axis 12 in order to deposit wire 11 on hook 4; then, shroud 15 is withdrawn up to disengaging hook 4 from housing 17.

If wire 11 must engage hook 4 according to an "Ω" or an overturned U, then stator 1 is indexed after that starts winding about another pole 6.

Alternatively, in case of an "alpha" loop, a shield 20, shields hook 4 in order to keep wire 11 at a forced position. This way, a second rotation of flier 10 about its own axis 12, opposite to the first rotation, forms a loop 7, substantially an alpha-shaped loop, about hook 4, since the wire 11 slides on shield 20. Finally, as the loop is formed, stator 1 is indexed and a next coil 8 is wound; the latter step is not shown in figure.

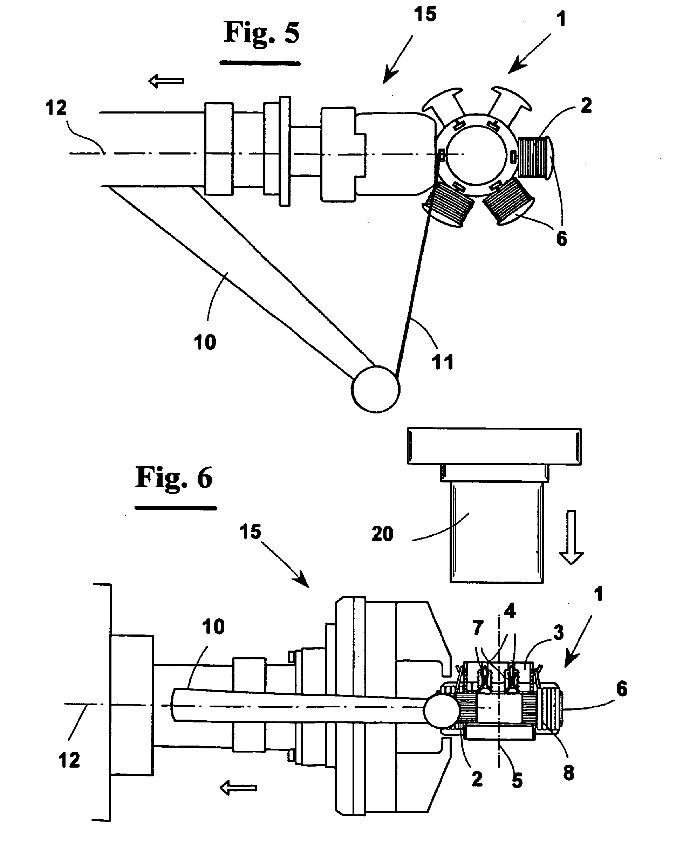

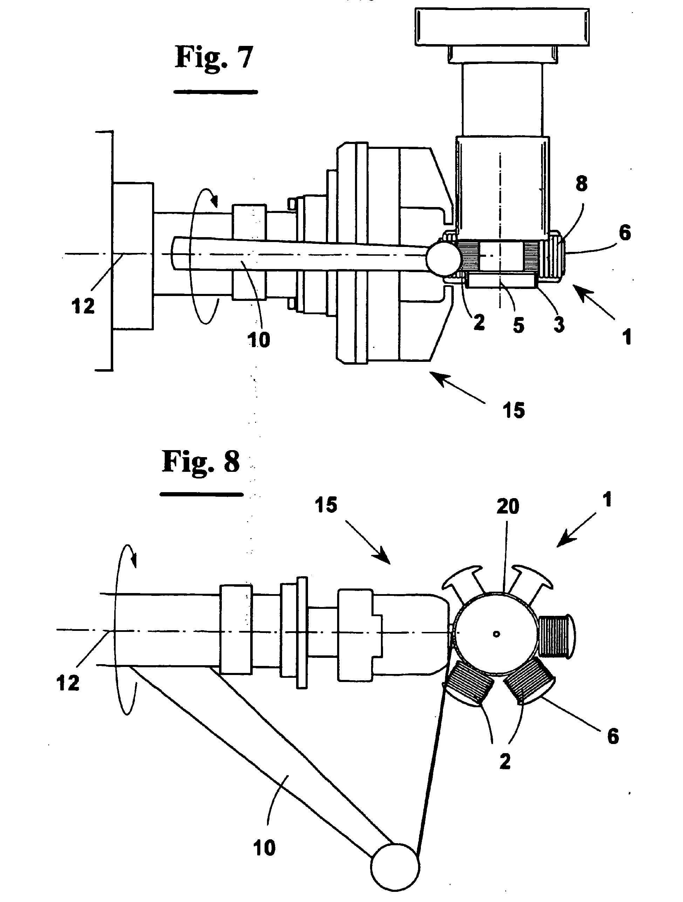

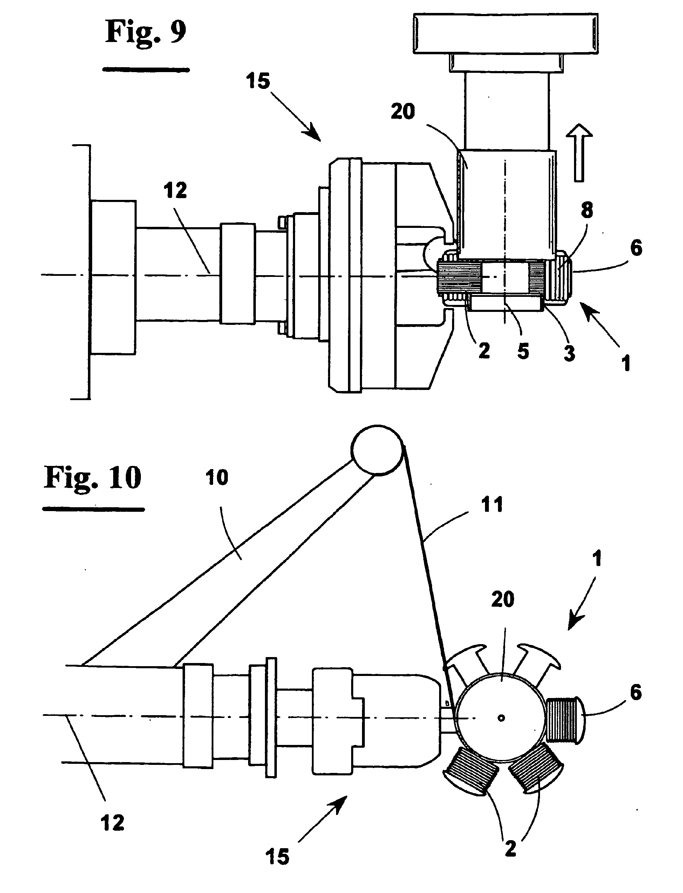

Figures 5 and 6 show, respectively a side and a top plan view the withdrawal of shroud 15, after the first rotation of flier 10, which guides wire 11 up to depositing onto hook 4. The withdrawal disengages hook 4 from housing 17 of shroud 15 and, therefore, allows shield 20 to move between shroud 15 and hook 4 same. Then, as shown in figures 7, 8, 9 and 10, wire 11, stretched by flier 10, is forced to pass under shield 20, with the result that wire 11 forms the loop 7 without disengaging from hook 4 .

In figures from 5 to 10, shield 20 is shown, according to a preferred embodiment, with cylindrical shape co-axial to the stator, and moving axially.

Alternatively, the shield can have open shape, for example flat, but with at least a rounded edge, for allowing the wire 11 to slide and preventing, during the hooking step, wire 11 from being damaged by shield 20.

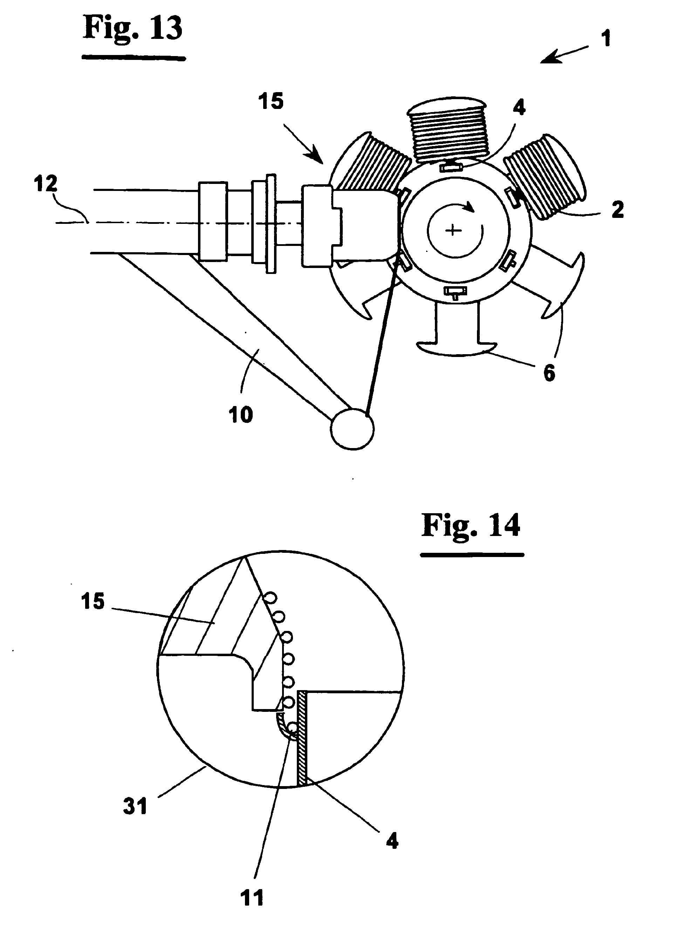

With reference to figures 13 and 14 an alternative solution of the invention, for winding wire 11 on pole 6 of stator 1 is obtained by a combination of movement of shroud 15 and flier 10, at the end of which shroud 15 is positioned so that the edge of shroud 15 same forms substantially a "slide" leading to the end of hook 4.

With a further combination of motion of shroud 15 and flier 10 the end of wire 11 is fixed to hook 4, since the "slide" forces wire 11 to follow predetermined trajectories that bring it to engage hook 4 according to a "Ω" or overturned U, an "alpha",etc.

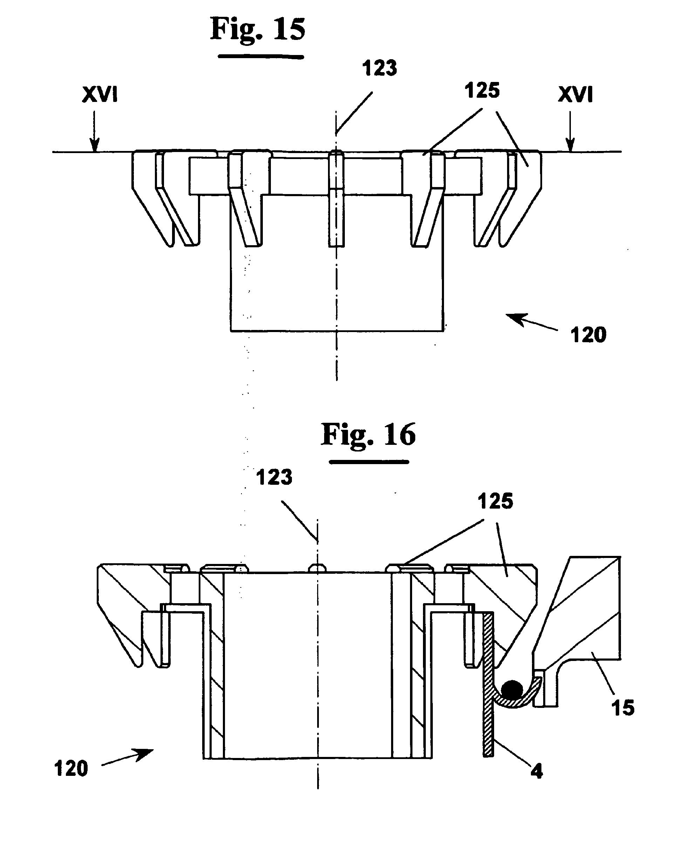

In a first alternative embodiment, shown in figures 15 and 16, the shield 120 has cylindrical shape with axis 123 and from which a plurality of teeth 125 extends. They have a form suitable for engaging the hook 4 of stator 1 from the above, providing support and avoiding deformation and break of the hook owing to bending actions or hits which might occur at the winding and termination steps. Tooth 125 has a tip oriented towards below to provide a guiding surface to the wire 11.

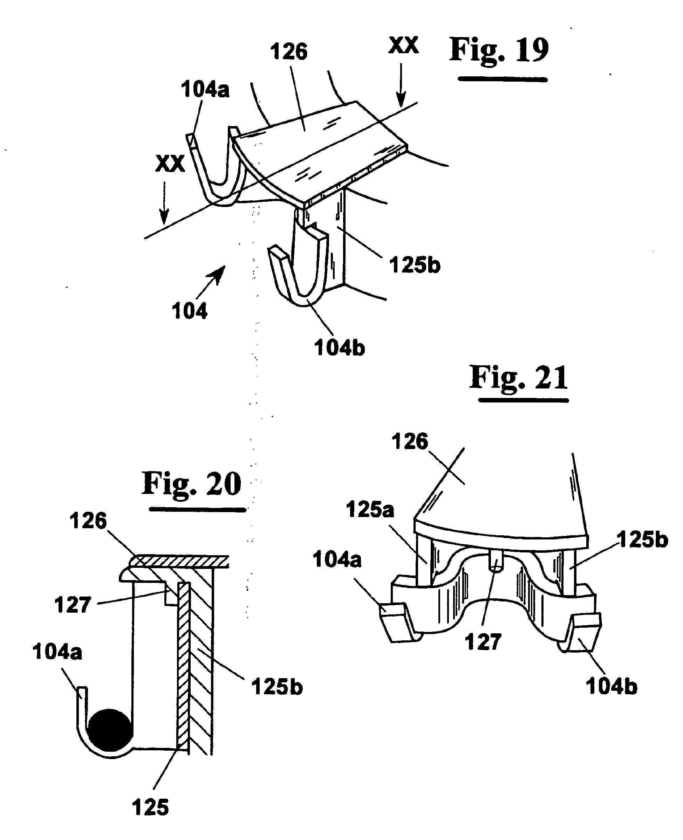

In a second alternative embodiment, the locking element comprises a central stiffening portion 124 that backs the hook 104 and two side portions 125a and 125b suitable for blocking the hook 104 on the stator 101 and for guiding the wire during termination. In particular, this embodiment is advantageous in case of multi-pole stators 101 equipped with "double hooks" 104 each of which comprises two side hooks 104a and 104b connected by a central stiff portion (figure 19 and 21).

As shown in detail in figures 20 and 21, respectively a cross sectional view and a perspective front view, the locking element has, furthermore, a protrusion or "tooth" 127. More in detail, in operative conditions the central stiff portion that connects the two hooks 104a and 104b is constrained between the central portion 124 of the locking element and the tooth 127 in order to limit further any possibility of movement. This way, it is possible to avoid that during the termination step the actions generated by the wire on the hook 104 can cause it to move away from a correct position or can damage it.

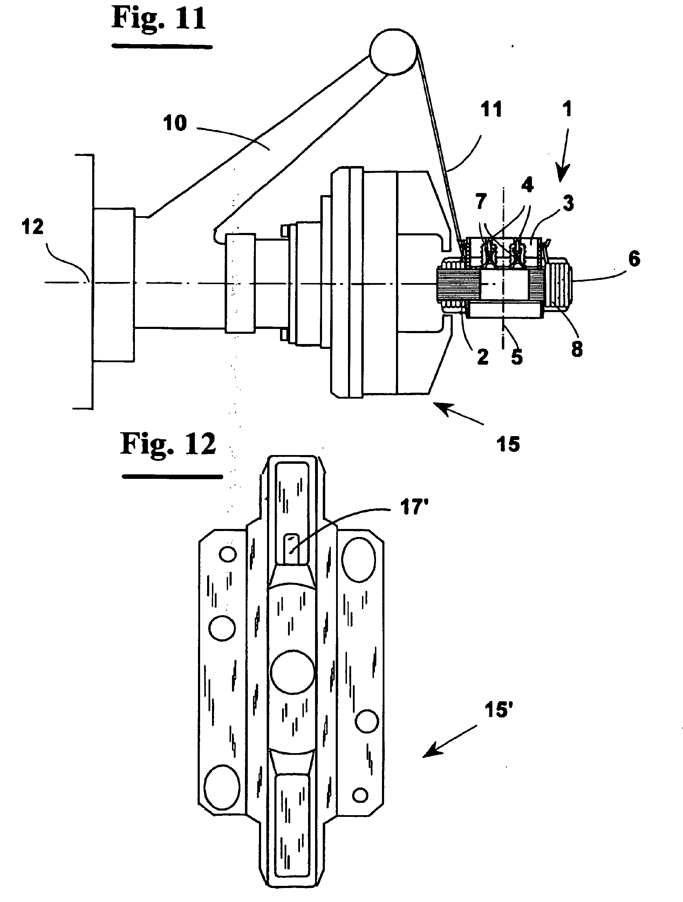

Notwithstanding in figure 1 a shroud 15 is shown formed by 2 semi-shrouds movable towards and away from each other, the invention can be applied also to coils with shrouds 15' as a single body, as shown in figure 12.

## Claims

1. Method for winding outwardly spooled multi-pole stators (1), formed by a sheets stack (2) ferromagnetic core, having an axis, a plurality of radially extending poles (6) defining grooves between them, and a terminal board (3) that coats in part the core and has a plurality of hooks (4); wherein the wire (11) is wound about the pole extensions (6), spooled by a flier (10), and guided by shrouds (15) which move radially with respect to the stator (1) overlapping the respective pole extension (6); and wherein, before and/or after winding, fastening operations are provided of the wire (11) about the hooks (4) by the flier (10);
**characterised in that** it comprises the steps of:
- prearranging a shroud (15);
- winding a coil (8) on the pole (6) and moving said shroud (15) towards said hook (4) for completing winding;
- approaching the shroud (15) to the hook (4) to make a guide for the wire (11) on said hook (4);
- rotating said flier (10) about its own axis (12) in order to deposit the wire (11) onto said hook (4);
- withdrawing said shroud (15);
- indexing the stator (1) ans winding a next coil (8).

2. Method for winding multi-pole stators (1) according to claim 1, wherein
said shroud (15) has a housing (17) suitable for receiving the hook (4),
a step of overlapping the shroud (15) to the hook (4) is provided causing said hook (4) to enter said housing (17), to make a guide for the wire (11) on said hook (4),
and said step of withdrawing said shroud (15) allows said hook (4) to disengage from said housing (17).

3. Method for winding multi-pole stators (1) with termination hooks (4), according to claim 2, wherein if the wire (11) forms a loop or "alpha" (7) about the hook (4), the steps are provided of:
- rotating a first time said flier (10) about its own axis (12) in order to deposit the wire (11) onto said hook (4);
- withdrawing said shroud (15) up to disengaging said hook (4) from said housing (17);
- shielding said hook (4) by means of a shield (20) in order to force the wire (11) at a chosen position;
- rotating a second time rotation said flier (10) about its own axis (12) opposite to said first rotation, in order to form a loop (7), substantially an alpha-shaped loop (7), about said hook (4), owing to the wire (11) sliding on said shield (20);
- indexing the stator (1) and winding a next coil (8).

4. Method for winding multi-pole stators (1) with termination hooks (4), according to claim 3, wherein said shroud (15) disengages from said hook (4) for allowing said shield (20) to move between said shroud (15) and said hook (4) after said rotation of the flier (10) for depositing the wire (11) onto the hook (4).

5. Machine for winding multi-pole stators (1), wherein the stators (1) are formed by a sheets stack (2) ferromagnetic core, having an axis, a plurality of radially extending poles (6) defining grooves between them, and a terminal board (3) that coats in part the core and has a plurality of hooks (4); comprising at least a flier (10) and a shroud (15) that moves radially with respect to the stator (1) overlapping a respective pole extension (6),
**characterised in that** said shroud (15) comprises means for guiding the wire (11) on said hook (4) during the termination step of said wire (11) onto said hook (4).

6. Machine for winding multi-pole stators (1), according to claim 5, wherein on said shroud (15), on a face oriented towards said stator (1), a housing (17) is made suitable for receiving a portion of the hook (4), to make a guide for the wire (11) on said hook (4).

7. Machine for winding multi-pole stators (1), according to claim 5, where the wire (11) forms a loop or "alpha" (7) about the hooks (4), wherein:
- a movable shield (20) is arranged between a disengaged position and an engaged position between said hook (4) and said shroud (15), suitable for keeping the wire (11) at a forced position, for preventing the wire (11) from disengaging from said hook (4) when said flier (10) moves backwards.

8. Machine for winding multi-pole stators (1), according to claim 7, wherein said shield (20), which covers said hooks (4) during the termination step, has cylindrical shape co-axial to the stator (1), and moves axially to the stator (1).

9. Machine for winding multi-pole stators (1), according to claim 7, wherein said shield (20), which covers said hooks (4) during the termination, has open shape with at least a rounded edge, for allowing the wire (11) to slide and preventing in the hooking step the wire (11) from being damaged by said shield (20).

10. Multi-pole stator winding machine, according to claim 5, wherein a cylindrical shield (120) is provided peripherally equipped with at least a locking element that in use is arranged at a hook (104) of said stator (101) during termination.

11. Multi-pole stator winding machine, according to claim 10, wherein said shield (120) has a plurality of teeth (125) oriented towards below for engaging and backing the hook (104), avoiding deformation and break of the hook (104) owing to bending actions or hits which might occur at the winding and termination steps.

12. Multi-pole stator winding machine, according to claim 10, wherein said locking element comprises a central stiffening portion (124) that in use is positioned to back said hook (104) and two side portions (125a,125b) suitable for blocking said hook (104) with respect to said stator (101) and guiding the wire (11) during termination.

13. Multi-pole stator winding machine, according to claim 10, wherein said locking element has, furthermore, a protrusion or "tooth" (127) so that said hook (104) is constrained between said central stiffening portion (124) and said tooth (127) in order to limit further any possibility of movement.

## Patentansprüche

1. Verfahren zum Wickeln von aussen gewickelten Mehr-Pol-Statoren (1), welche durch einen feromagnetischen Kern aus einem Stapel von Plättchen gebildet ist, mit einer Achse, einer Mehrzahl von sich radial erstreckenden Polen (6), welche zwischen sich Vertiefungen bilden und einer Endplatte (3), welche teilweise den Kern bedeckt und eine Mehrzahl von Haken (4) aufweist; wobei der Draht (11) um die Polvorsprünge (6) gewickelt wird und mittels eines Flyers (10) aufgespult wird, und mittels Kragen (15) geführt wird, welche sich radial bezogen auf den Stator (1) bewegen und die entsprechenden Polvorsprünge (6) überlappen; und wobei, vor und/oder nach dem Wickeln, Berestigungsvorgänge des Drahts (11) um die Haken (4) durch den Fiyer (10) vorgenommen werden;
**dadurch gekennzeichnet dass** das Verfahren die folgenden Schritte aufweist:
- Voranordnen eines Kragens (15);
- Wickeln einer Spule (8) auf dem Pol (6) und Bewegen des Kragens (15) wegen den besagten Haken (4) um die Wicklung fertig zu stellen;
- Annähern des Kragens (15) gegen den Haken (4) um eine Führung für den Draht (11) auf dem Haken (4) zu schaffen;
- Rotieren des Flyers (10) um seine eigene Achse (12) um den Draht (11) auf besagtem Haken (4) abzulegen;
- Zurückziehen des Kragens (15);
- Nachführen des Stators (1) und Wickeln einer nächsten Spule (8).

2. Verfahren zum Wickeln von Mehr-Pol-Statoren (1) gemäss Anspruch 1, wobei
besagter Kragen (15) ein Gehäuse (17) aufweist, das zur Ausnahme des Hakens (4) geeignet ist,
wobei ein Schnitt des Überlappens des Kragens (5) mit dem Haken (4) vorgesehen ist, welcher bewirkt, dass besagter Haken (4) in besagtes Gehäuse (17) eintritt, um eine Führung für den Draht (11) auf dem Haken (4) zu bilden, und wobei besagter Schritt des Zurückziehens des Kragens (15) es dem Haken (4) erlaubt, ausser Eingriff mit besagtem Gehäuse (17) zu gelangen.

3. Verfahren zum Wickeln von Mehr-Pol-Statoren (1) mit Terminierungshaken (4), gemäss Anspruch 2, wobei wenn die Drähte (11) eine Schlaufe oder ein "apha" (7) um den Haken (4) bilden, die tolgenden Schritte ausgeführt werden:
- Rotieren des besagten Flyers (10) ein erstes Mal um seine Achse (12), um den Draht (11) auf dem Haken (4) abzulegen;
- Zurückziehen des Kragens (15), bis besagter Haken (4) ausser Eingriff mit dem Gehäuse (17) gelangt;
- Abdecken des Hakens (4) mittels einer Blende (20), um den Draht (11) in eine bestimmte Position zu zwingen;
- Rotieren des besagten Flyers (10) ein zweites Mal um seine eigene Achse (12) in einer Richtung entgegen zu besagter ersten Rotation, um eine Schlaufe (7), im Wesentlichen eine Alpha-förmige Schlaufe (7), um den Haken (4) zu bilden, auf Grund eines Gleitens des Drahts (11) auf der Blende (20);
- Nachführen des Stators (11) und Wickeln einer nächsten Spule (8).

4. Verfahren zum Wickeln von Mehr-Pol-Statoren (1) mit Tcrminierungshaken (4), gemäss Anspruch 3, wobei besagter Kragen (15) ausser Eingriff mit besagtem Haken (4) gerät, um zu erlauben, dass sich besagte Blende (20) zwischen dem Kragen (15) und dem Haken (4) nach besagter Rotation des Flyers (10) bewegt, um den Draht (11) auf dem Haken (4) abzulegen.

5. Vorrichtung zum Wickeln von Mehr-Pol-Statoren (1), wobei die Statoren (1) durch einen feromagnetischen Kern aus gestapelten Plättchen (2) gebildet sind, mit einer Achse, einer Mehrzahl von sich radial erstreckenden Polen (6), welche Vertiefungen zwischen sich bilden, und einer Endplatte (3), welche teilweise den Kern bedeckt und eine Vielzahl von Haken (4) aufweist; enthalten wenigstens einen Flyer (10) und einen Kragen (15), welcher sich radial bezogen auf den Stator (1) bewegt und entsprechende Polvorsprünge (6) überlappt,
**dadurch gekennzeichnet, dass** besagter Kragen (15) Mittel zum Führen des Drahtes (11) auf dem Haken (4) während dem Terminierungsschritt des Drahts (11) auf dem Haken (4) aufweist.

6. Maschine zum Wickeln von Mehr-Pol-Statoren (1), gemäss Anspruch 5, wobei auf besagtem Kragen (15), auf einer Seite, welche gegen den Stator (1) hin gerichtet ist, ein Gehäuse (17) angeordnet ist, welches geeignet ist zum Aufnehmen eines Teils des Hakens (4), um eine Führung für den Draht (11) auf besagtem Haken (4) zu machen.

7. Maschine zum Wickeln von Mehr-Pol-Statoren (1), gemäss Anspruch 5, wobei der Draht (11) eine Schlaufe oder ein "alpha" (7) um die Haken (4) bildet, wobei:
- Eine bewegliche Blende (20) zwischen einer Position ausser Eingriff und einer Position in Eingriff zwischen dem Haken (4) und dem Kragen (15) angeordnet ist, geeignet um den Draht (11) in einer Zwangsposition zu halten, um zu verhindern, dass der Draht (11) ausser Eingriff mit besagtem Haken (4) gelangt, wenn besagter Flyer (10) sich rückwärts bewegt.

8. Vorrichtung zum Wickeln von Mehr-Pol-Statoren (1) gemäss Anspruch 7, wobei besagte Blende (20), welche besagte Haken (4) während dem Terminierungsschritt überdeckt, eine zylinderische Form aufweist, welche koaxial zum Stator (1) ist und wobei besagte Blende (20) sich axial zum Stator (1) bewegt.

9. Maschine zum Wickeln von Mehr-Pol-Statoren (1), gemäss Anspruch 7, wobei besagte Blende (20), welche besagte Haken (4) während der Terminierung überdeckt, eine offene Form mit wenigstens einer abgerundeten Kante aufweist, um ein Gleiten des Drahtes (11) zu erlauben und um zu vermeiden dass der Draht (11) durch die Blende (20) während dem Verhakungsschritt beschädigt wird.

10. Mehr-Pol-Statorwickelmaschine gemäss Anspruch 5, wobei eine zylinderische Blende (120) vorgesehen ist, welche peripher mit wenigstems einem Sicherungselement versehen ist, welches in Gebrauch während dem Terminieren auf dem Haken (104) des Stators (101) angeordnet ist.

11. Mehr-Pol-Statorwickelmaschine, gemäss Anspruch 10, wobei besagte Blende (120) eine Mehrzahl von Zähnen (125) aufweist, welche nach unten ausgerichtet sind, um in Eingriff mit besagtem Haken (104) zu gelangen und ihn zu unterstützen, um eine Verformung und ein Brechen des Hakens (104) aufgrund von Biegungsvorgängen oder Schlägen zu verhindern, welche während der Wickel- und Termininerungsschritten auftreten können.

12. Mehr-Pol-Statorwickelmaschine, gemäss Anspruch 10, wobei besagtes Sicherungselement einen zentralen Verstärkungsabschnitt (124) aufweist, welcher in Gebrauch so angeordnet ist, um den Haken (104) zu unterstüzten, wobei das Sicherungselement zwei Seitenabschnitte (125a, 125b) aufweist, welcher geeignet sind, um den Haken (104) bezogen auf den Stator (101) zu blockieren und den Draht (11) während der Terminierung zu führen,

13. Mehr-Pol-Statorwickelmaschine gemäss Anspruch 10, wobei besagtes Sicherungselement ausserdem einen Vorsprung oder "Zahn" (127) derart aufweist, dass besagter Haken (104) zwischen besagtem Versteifungsabschnitt (124) und besagtem Zahn (127) eingefasst ist, um jegliche Bewegungsmöglichkeit weiler zu begrenzen.

## Revendications

1. Procédé pour enrouler vers l'extérieur des stators multipolaires (1) embobinés, formés par un coeur ferromagnétique à empilement de fouilles (2), ayant un axe, une pluralité de pôles (6) s'étendant dans le plan radial définissant des gorges entre eux et une carte terminale (3) revêtant en partie le coeur et ayant une pluralité de crochets (4) ; dans lequel le câble (11) est enroulé autour des prolongements de pôle (6), embobinés par un système volant (10) et guidé par des carénages (.15) se déplaçant dans le plan radial par rapport au stator (1) chevauchant le prolongement de pôle (6) respectif ; et dans lequel, avant et/ou après l'enroulement, des opérations de fixation du câble (11) autour des crochets (4) par le système volant (10) sont prévue ;
**caractérisé en ce qu'**il comprend les étapes consistant à :
- préarranger un carénage (15) ;
- enrouler une bobine (8) sur le pôle (6) et déplacer ledit carénage (15) en direction dudit crochet (4) pour finaliser l'enroulement ;
- approcher le carénage (15) du crochet (4) et réaliser un guide pour le câble (11) sur ledit crochet (4) ;
- tourneur ledit système volant (10) autour de son propre axe (12) afin de déposer le câble (11) sur ledit crochet (4) ;
- retires ledit carénage (15) ;
- indexer le stator (1) et enrouler une bobine (8) suivante.

2. Procédé pour enrouler des stators multipolaires (1) selon la revendication 1, dans lequel :
ledit carénage (15) a un carter (17) adapté pour recevoir le crochet (4) ;
une étape de chevauchement du carénage (15) sur le crochet (4) est prévue pour amener ledit crochet (4) à entrer dans ledit carter (17), afin de réaliser un guide pour le câble (11) sur ledit crochet (4) ;
et ladite étape de retrait dudit carénage (15) permet de dégager ledit crochet (4) dudit carter (17).

3. Procédé pour enrouler des stators multipolaires (1) avec des terminaisons à crochet (4), selon la revendication 2, dans lequel si le câble (11) forme une boucle ou un « alpha » (7) autour du crochet (4), les étapes suivantes sont prévues :
- rotation une première fois dudit système volant (10) autour de son axe (12) propre afin de déposer le câble (11) sur ledit crochet (4) ;
- retrait dudit carénage (15) jusqu'à dégager ledit crochet (4) dudit carter (17) ;
- protection dudit crochet (4) au moyen d'un écran de protection (20) afin de contraindre le câble (11) dans une position choisie ;
- rotation une seconde fois dudit système volant (10) pour le faire autour de son axe (12) propre dans le sens opposé à ladite première rotation, afin de former une boucle (7), sensiblement une boucle (7) en forme d'alpha, autour dudit crochet (4), grâce au glissement du câble (11) sur ledit écran de protection (20) ;
- indexation du stator (1) et enroulement d'une bobine (8) suivante.

4. Procédé pour enrouler des stators multipolaires (1) avec des terminaisons à crochet (4), selon la revendication 3, dans lequel ledit carénage (15) est dégagé dudit crochet (4) pour permettre audit écran de protection (20) d'être déplacé entre ledit carénage (15) et ledit crochet (4) après ladite rotation du système volant (10) en vue de déposer le câble (11) sur le crochet (4).

5. Machine pour enrouler des stators multipolaires (1), dans lequel les stators (1) sont formés par un coeur ferromagnétique à empilement de feuilles (2), ayant un axe, une pluralité de pôles (6) s'étendant dans le plan radial définissant des gorges entre eux et une carte terminale (3) revêtant en partie le coeur et ayant une pluralité de crochets (4) ; comprenant au moins un système volant (10) et un carénage (15) se délaçant dans le plan radial par rapport au stator (1) chevauchant un prolongement de pôle (6) respectif ; **caractérisée en ce que** ledit carénage (15) comprend des moyens pour guider le câble (11) sur ledit crochet (4) pendant l'étape de terminaison dudit câble (11) sur ledit crochet (4).

6. Machine pour enrouler des stators multipolaires (1) selon la revendication 5, dans laquelle sur ledit carénage (15), sur une face orientée en direction dudit stator (1), un carter (17) est réalisé de façon adaptée pour recevoir une partie du crochet (4), pour réaliser un guide pour le câble (11) sur ledit crochet (4).

7. Machine pour enrouler des stators multipolaires (1) selon la revendication 5, dans laquelle le câble (11) forme une boucle ou un « alpha » (7) autour des crochets (4), dans laquelle :
- un écran de protection mobile (20) est agencé entre une position de dégagement et une position de mise en prise prévue entre ledit crochet (4) et ledit carénage (15), adapté pour maintenir le câble (11) dans une position contrainte, pour empêcher le câble (11) de se dégager dudit crochet (4) lorsque ledit système volant (10) se déplace vers l'arrière.

8. Machine pour enrouler des stators multipolaires (1) selon la revendication 7, dans laquelle ledit écran de protection (20) recouvrant lesdits crochets (4) pendant l'étape d'achèvement prend une forme cylindrique coaxiale par rapport au stator (1) et se déplace dans le plan axial par rapport au stator (1).

9. Machine pour enrouler des stators multipolaires (1) selon la revendication 7, dans laquelle ledit écran de protection (20) recouvrant lesdits crochets (4) pendant l'achèvement a une forme ouverte avec au moins un bord arrondi, pour permettre au câble (11) de glisser et empêcher lors de l'étape d'accrochage que le câble (11) ne soit endommagé par ledit écran de protection (20).

10. Machine d'enroulement de stator multipolaire selon la revendication 5, dans laquelle un écran de protection (120) cylindrique est prévu en périphérie et équipé d'au moins un élément de verrouillage agencé en fonctionnement au niveau d'un crochet (104) dudit stator (101) lors de l'achèvement.

11. Machine d'enroulement de stator multipolaire selon la revendication 10, dans laquelle ledit écran de protection (120) a une pluralité de dents (125) orientées vers le dessous pour entrer en prise avec le crochet (104) et le maintenir, évitant la déformation et la rupture du crochet (104) dues aux actions de flexion et aux chocs pouvant se produire lors des étapes d'enroulement et d'achèvement.

12. Machine d'enroulement de stator multipolaire selon la revendication 10, dans laquelle ledit élément de verrouillage comprend une partie de rigidification centrale (124) positionnée en fonctionnement de façon à maintenir ledit crochet (104) et deux parties latérales (125a, 125b) adaptées pour bloquer ledit crochet (104) par rapport audit stator (101) et pour guider le câble (11) lors de l'achèvement.

13. Machine d'enroulement de stator multipolaire selon la revendication 10, dans laquelle ledit élément de verrouillage a, en outre, une saillie ou « dent » (127) telle que ledit crochet (104) est contraint entre ladite partie de rigidification centrale (124) et ladite dent (127) afin de limiter davantage toute possibilité de mouvement.
